# EUROPEAN PATENT APPLICATION

(11) **EP 4 836 402 A1**
(43) Date of publication of application: **04.11.2026**
(21) Application number: 25315142.7
(22) Date of filing: 29.04.2025
(51) Int. Cl.: H04N 19/12, H04N 19/13, H04N 19/157, H04N 19/176, H04N 19/18, H04N 19/61, H04N 19/70

(54) **METHOD AND APPARATUS FOR CODING PREDICTION RESIDUALS OF A PICTURE EMPLOYING A NON-SEPARABLE TRANSFORM**

(71) Applicant: Beijing Xiaomi Mobile Software Co., Ltd., Beijing Beijing 100085 (CN)
(72) Inventor: Abdoli, Mohsen, Beijing, 100085 (CN); Ghaznavi Youvalari, Ramin, Beijing, 100085 (CN); Tissier, Alexandre, Beijing, 100085 (CN); Plowman, Frank, Beijing, 100085 (CN)
(74) Representative: Zimmermann, Tankred Klaus

(57) **Abstract**

A method of coding a prediction residual of one or more blocks of a picture is described. The method includes coding a prediction residual of a block of the picture using a non-separable transform process for one or more transform units (TUs) of the block. The non-separable transform process is enabled dependent on a position of a last significant coefficient of the TU and at least one further TU coefficient feature fulfilling one or more pre-defined conditions, and/or a position of a last significant coefficient of the TU and at least one further TU coefficient feature are parsed from a data stream before information related to the non-separable transform process.

## Description

### Technical Field

The present disclosure generally relates to the field of encoding/decoding pictures, images or videos, and embodiments of the present disclosure concern improvements for coding a block of a picture using non-separable transform. More specific embodiments of the present disclosure relate to methods and apparatus for enabling a non-separable transform process and/or parsing information related to the non-separable transform process from a data stream.

### Background

The encoding and decoding of a picture, an image or a video is performed in accordance with a certain standard, for example, in accordance with the ISO/IEC 14496-10 Advanced Video Coding, AVC, standard (see reference [1]), the ISO/IEC 23094-1 Essential video coding, EVC, standard, the ISO/IEC 23008-2 High Efficiency Video Coding, HEVC, standard (see reference [2]), the ISO/IEC 23090-3 Versatile Video Coding, VVC, standard (see reference [3]) or the AOMedia Video 1, AV1, standard.

For processing a picture, an image or a video, e.g., when encoding and/or decoding prediction residuals of the picture, the image or the video, a state-of-the-art process may use a non-separable transform process.

Thus, there is a need to provide further improvements for processing a picture, an image or a video, e.g., when encoding and/or decoding the picture, the image or the video.

### Summary

The present disclosure provides a method of coding a prediction residual of one or more blocks of a picture, the method comprising:
coding a prediction residual of a block of the picture using a non-separable transform process for one or more transform units (TUs) of the block, wherein
- the non-separable transform process is enabled dependent on a position of a last significant coefficient of the TU and at least one further TU coefficient feature fulfilling one or more pre-defined conditions, and/or
- a position of a last significant coefficient of the TU and at least one further TU coefficient feature are parsed from a data stream before information related to the non-separable transform process.

In accordance with embodiments, the at least one further TU coefficient is compared to a predefined threshold to determine whether the at least one further TU coefficient fulfils the pre-defined condition, and, when the at least one further TU coefficient fulfils the pre-defined condition, the non-separable transform process is eligible for the TU.

In accordance with embodiments, the at least one further TU coefficient feature comprises one or more of the following:
- a number of non-significant coefficients of the TU in a predefined frequency range, like a low-frequency range, of the TU, wherein a non-significant coefficient of the TU has a predefined value, like zero, or a value less than the predefined threshold,
- a ratio including the number of non-significant coefficients in the predefined frequency range of the TU
- a sum of frequencies of significant coefficients in the predefined frequency range of the TU,
- a sum of amplitudes of coefficients in the predefined frequency range of the TU,
- a number of significant coefficients in the predefined frequency range of the TU.

In accordance with embodiments, the ratio comprises a ratio of the non-significant coefficients with respect to
- a number of significant coefficients in the predefined frequency of the TU, or
- a total number of coefficients of the TU, or
- a length of the predefined frequency range of the TU.

In accordance with embodiments, the frequency of a significant coefficient is determined using at least one predefined metric, e.g., a scan position, like a scan index in the predefined frequency range of the TU.

In accordance with embodiments, the sum of amplitudes of the coefficients comprises a sum of significant coefficients in the predefined frequency range.

In accordance with embodiments, the amplitudes of the significant coefficients are weighted, e.g., using a predefined metric that may be based on a scan position, like a scan index in the predefined frequency range, e.g., a low-frequency range, of the TU.

In accordance with embodiments,
one or more transform sets for the non-separable transform process are enabled or disabled dependent on the at least one further TU coefficient feature, and
when the at least one further TU coefficient feature is
   - below a predefined threshold, a number of transform sets for the non-separable transform process is reduced from a first number, like a default number defined by a codec, to a second number being less than the first number,
   - at or above the predefined threshold, the number of transform sets for the non-separable transform process is kept at the first number, like the default number defined by a codec.

In accordance with embodiments,
the at least one further TU coefficient feature, like the number of significant or nonsignificant coefficients of the TU, is parsed, e.g., from a data stream, before parsing an index, like a lfnstIdx value, indicating a transform set to be used for the non-separable transform process, and
in case the number of transform sets is to be reduced, the parsed index is adapted to represent the second number of transform sets.

In accordance with embodiments, the predefined threshold is an adaptive threshold that may be determined based on one or more TU characteristics, like a size of the TU, e.g. by accessing a look-up table holding different thresholds for different TU sizes as defined in a codec.

In accordance with embodiments,
the information related to the non-separable transform process comprises an index, like a lfnstIdx value, indicating a transform set to be used for the non-separable transform process, and the at least one further TU coefficient feature comprises at least one TU syntax element, like a significance flag, a coefficient level, a sign, and
the position of a last significant coefficient of the TU and at least one TU syntax element are parsed from a data stream before the index.

In accordance with embodiments,
for identifying significant coefficients in the predefined frequency range, the significance flags of the coefficients of the TU in the predefined frequency range are parsed before the index, and/or
for identifying coefficient amplitudes in the predefined frequency range, the coefficients of the TU in the predefined frequency range are parsed before the index.

In accordance with embodiments, coding the prediction residual comprises decoding the prediction residual by:
- decoding a quantized prediction residual of the one or more TUs, e.g., from a data stream,
- inverse-quantizing the quantized prediction residual,
- when enabled, applying the non-separable transform process on the TU, and
- inverse-transforming the inverse-quantized prediction residual.

In accordance with embodiments, coding the prediction residual comprises encoding the prediction residual by:
- obtaining the block of the picture to be encoded,
- separating the block into the one or more TUs,
- obtaining the prediction residual for a TU,
- transforming the prediction residual,
- when enabled, applying the non-separable transform process on the TU,
- quantizing the transformed prediction residual, and
- encoding the quantized prediction residual.

The present disclosure provides an apparatus of processing one or more blocks of a picture, the apparatus comprising:
a processing module, wherein the processing module is configured code a prediction residual of a block of the picture using a non-separable transform process for one or more transform units (TUs) of the block, wherein
- the non-separable transform process is enabled dependent on a position of a last significant coefficient of the TU and at least one further TU coefficient feature fulfilling one or more pre-defined conditions, and/or
- a position of a last significant coefficient of the TU and at least one further TU coefficient feature are parsed from a data stream before information related to the non-separable transform process.

The technical solutions provided according to embodiments of the present disclosure have the following beneficial effects.

A state-of-the-art process for coding prediction residuals uses a non-separable transform process only dependent on a position of a last significant coefficient(LastSigPos) of a transform unit (TU) which is assumed to be in the a -frequency range of the TU. However, it may be that also a mid-frequency residual meets the LastSigPos condition with no or very few actual low frequency transform coefficients. In such cases, the non-separable transform will be enabled for the residual coding, although it is not intended for it. This results in bitrate overhead for signaling the non-separable transform information and also it may increase the computational complexity of encoder or decoder.

Further, a state-of-the-art process for coding prediction residuals, which uses a non-separable transform process, obtains (e.g., by parsing a data stream) information related to the non-separable transform process, like the lfnstIdx, followed by parsing the LastSigPos. This parsing order may be disadvantageous in case the TU related information is needed for processing ahead of the information related to the non-separable transform process. Also, this order may lead to a reduction in coding efficiency.

For addressing the drawbacks encountered in the prior art, the present disclosure teaches an approach which codes a prediction residual of a block of the picture using a non-separable transform process for one or more transform units (TUs) of the block, wherein, for addressing the issue regarding an undesired enabling of the non-separable transform process, it is enabled dependent on a position of a last significant coefficient of the TU and at least one further TU coefficient feature fulfilling one or more pre-defined conditions. The at least one further TU coefficient feature may also be referred to herein as a feature of the TU's coefficients, as a feature related to the transform coefficients, or as contextual information related to one or more of the coefficients of the TU. For addressing the problems due to the conventional parsing order, a position of a last significant coefficient of the TU and at least one further TU coefficient feature are parsed from a data stream before information related to the non-separable transform process.

The inventive approach is advantageous as it avoids the unintended use of a non-separable transform for the residual coding and the associated drawbacks. Further, the inventive approach is advantageous as it improves an order of the parsing of necessary information for the non-separable transform process which improves a coding efficiency.

It is to be understood that the content described in this section is not intended to identify key or critical features of the embodiment of the present disclosure, nor is it intended to limit the scope of the present disclosure. Other features of the present disclosure become readily apparent from the following description.

### Brief Description of the Drawings

The drawings are explanatory and serve to explain the present disclosure, and are not to be construed to limit the present disclosure to the illustrated embodiments.
- Fig. 1: is a block diagram of a conventional video encoder,
- Fig. 2: is a block diagram of a conventional video decoder,
- Fig. 3: illustrates a Low-Frequency Non-Separable Transform (LFNST) process,
- Fig. 4: illustrates an overview of proposed non-separable primary transforms (NSPTs) among existing LFNSTs,
- Fig. 5: illustrates a parsing order of a residual TU in the presence of LFNST in VVC and ECM.
- Fig. 6: illustrates a table (taken from ECM-16.0) of LastSigPos thresholds based on TU size,
- Fig. 7(A): illustrates a flow diagram of an embodiment of a method of coding a prediction residual of one or more blocks of a picture with a first aspect of the present disclosure,
- Fig. 7(B): illustrates a flow diagram of an embodiment of a method of coding a prediction residual of one or more blocks of a picture with a second aspect of the present disclosure,
- Fig. 8: illustrates an embodiment using numSigCoeff to reduce a number of allowed transform sets (lfnstIdx),
- Fig. 9: illustrates an embodiment using a modified parsing order of a residual TU to incorporate a sigFlag in the LFNST condition,
- Fig. 10: illustrates an embodiment using a modified parsing order of a residual TU to incorporate coefficient levels in the LFNST condition,
- Fig. 11: illustrates a flow diagram of a method for decoding an encoded data stream in accordance with embodiments of the present disclosure,
- Fig. 12: illustrates a flow diagram of a further embodiment of decoding a prediction residual of a currently processed block of a picture or frame,
- Fig. 13: illustrates a flow diagram of a method for encoding a picture into an encoded data stream in accordance with embodiments of the present disclosure,
- Fig. 14: illustrates a flow diagram of a further embodiment of encoding a prediction residual of a currently processed block of a picture or frame,
- Fig. 15(A): illustrates a block diagram of an apparatus of processing one or more blocks of a picture in accordance with embodiments of a first aspect of the present disclosure,
- Fig. 15(B): illustrates a block diagram of an apparatus of coding one or more blocks of a picture in accordance with further embodiments of a second aspect of the present disclosure,
- Fig. 16: illustrates a block diagram of a decoder for decoding an encoded data stream in accordance with embodiments of the present disclosure,
- Fig. 17: illustrates a block diagram of an encoder for encoding a picture into an encoded data stream in accordance with embodiments of the present disclosure,
- Fig. 18: illustrates a data stream in accordance with embodiments of the present disclosure, and
- Fig. 19: illustrates a block diagram illustrating an electronic device according to embodiments of the present disclosure.

### Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein may be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

In the present disclosure, the terms "if", "when", "in case", "responsive to" may be used interchangeably.

### Standard Video Coder

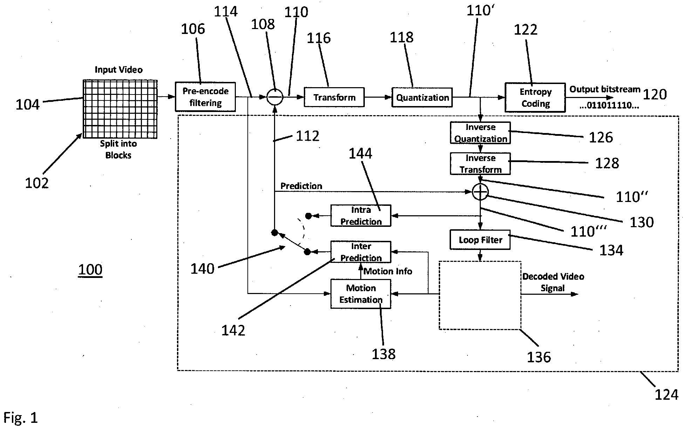

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals are calculated or determined, for example, by subtracting the predicted block from the original image block. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110"' that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110‴. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

### Standard Video Decoder

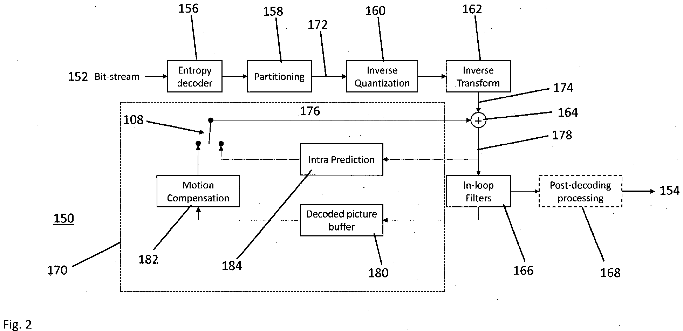

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 178. The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

### Intra Prediction Tools in JVET

### Low-frequency non-separable transform (LFNST)

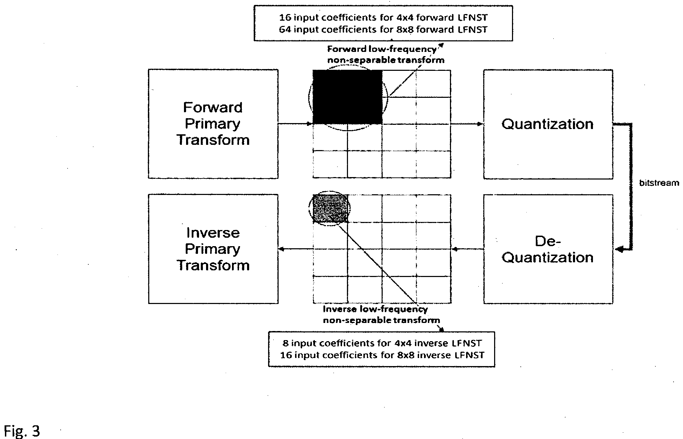

In VVC, LFNST is applied between the forward primary transform and the quantization (at encoder) and between the de-quantization and the inverse primary transform (at decoder side) as shown in Fig. 3. In LFNST, a 4x4 non-separable transform or an 8x8 non-separable transform is applied according to block size. For example, 4x4 LFNST is applied for small blocks (i.e., min(width, height) < 8) and 8x8 LFNST is applied for larger blocks (i.e., min(width, height) > 4).

The application of a non-separable transform, which is being used in LFNST, is as follows:
To apply a 4x4 LFNST, the 4x4 input block X $X = \left[\begin{matrix}{X}_{00} & {X}_{01} & {X}_{02} & {X}_{03} \\ {X}_{10} & {X}_{11} & {X}_{12} & {X}_{13} \\ {X}_{20} & {X}_{21} & {X}_{22} & {X}_{23} \\ {X}_{30} & {X}_{31} & {X}_{32} & {X}_{33}\end{matrix}\right]$ is first represented as a vector ${X}^{⇀}$: ${X}^{⇀} = {\left[{X}_{00} {X}_{01} {X}_{02} {X}_{03} {X}_{10} {X}_{11} {X}_{13} {X}_{20} {X}_{21} {X}_{22} {X}_{30} {X}_{31} {X}_{32} {X}_{33}\right]}^{T}$

The non-separable transform is obtained as ${F}^{⇀} = T ⋅ {X}^{⇀}$, where ${F}^{⇀}$ indicates the transform coefficient vector, and T is a 16x16 transform matrix. The 16x1 coefficient vector ${F}^{⇀}$ is subsequently re-organized as 4x4 block using the scanning order for that block (horizontal, vertical or diagonal). The coefficients with smaller index are placed with the smaller scanning index in the 4x4 coefficient block.

### Reduced Non-separable transform

LFNST (low-frequency non-separable transform) is based on a direct matrix multiplication approach to apply the non-separable transform so that it is implemented in a single pass without multiple iterations. To minimize computational complexity and memory space to store the transform coefficients, the non-separable transform matrix dimension may be reduced. Hence, a reduced non-separable transform (or RST) method is used in LFNST. The main idea of the reduced non-separable transform is to map a N dimensional vector (N is commonly equal to 64 for an 8x8 non-separable secondary transform (NSST) matrix) to an R dimensional vector in a different space, where N/R (R < N) is the reduction factor. Hence, instead of a NxN matrix, the RST matrix becomes an R×N matrix as follows: ${T}_{RxN} = \left[\begin{matrix}{t}_{11} & {t}_{12} & {t}_{13} & … & {t}_{1 N} \\ {t}_{21} & {t}_{22} & {t}_{23} & & {t}_{2 N} \\ & ⋮ & & ⋱ & ⋮ \\ {t}_{R 1} & {t}_{R 2} & {t}_{R 3} & ⋯ & {t}_{RN}\end{matrix}\right]$ where the R rows of the transform are R bases of the N dimensional space.

The inverse transform matrix for RT is the transpose of its forward transform. For an 8x8 LFNST matrix, a reduction factor of 4 is applied, and a 64x64 direct matrix, which is a conventional 8x8 non-separable transform matrix size, is reduced toa 16x48 direct matrix. Hence, the 48×16 inverse RST matrix is used at the decoder side to generate the core (primary) transform coefficients in the 8×8 top-left regions. When16x48 matrices are applied, instead of 16x64 matrices, with the same transform set configuration, each takes 48 input data from three 4x4 blocks in a top-left 8x8 block excluding right-bottom 4x4 block. With the help of the reduced dimension, memory usage for storing all LFNST matrices is reduced from 10KB to 8KB with a reasonable performance drop. In order to reduce the complexity, LFNST is restricted to be applicable only if all coefficients outside the first coefficient sub-group are non-significant. Hence, all primary-only transform coefficients have to be zero when LFNST is to be applied. This allows a conditioning of the LFNST index signaling on the last-significant position, and hence avoids the extra coefficient scanning in the current LFNST design, which is needed for checking for significant coefficients at specific positions only. The worst-case handling of LFNST (in terms of multiplications per pixel) restricts the non-separable transforms for 4x4 and 8x8 blocks to 8x16 and 8x48 transforms, respectively. In those cases, the last-significant scan position has to be less than 8 when LFNST is applied, for other sizes less than 16. For blocks with a shape of 4xN and Nx4 and N > 8, the restriction implies that the LFNST is now applied only once, and that to the top-left 4x4 region only. As all primary-only coefficients are zero, when LFNST is applied, the number of operations needed for the primary transforms is reduced in such cases.

From an encoder perspective, the quantization of coefficients is remarkably simplified when LFNT transforms are tested. A rate-distortion optimized quantization may be done at maximum for the first 16 coefficients (in scan order), the remaining coefficients are enforced to be zero.

### LFNST transform selection

In total, there are 4 transform sets, and 2 non-separable transform matrices (kernels) per transform set are used in LFNST. The mapping from the intra prediction mode to the transform set is pre-defined as shown in the table below. If one of three Cross-Component Linear Model (CCLM) modes (INTRA_LT_CCLM, INTRA_T_CCLM or INTRA_L_CCLM) is used for the current block (81 <= predModeIntra <= 83), transform set 0 is selected for the current chroma block. For each transform set, the selected non-separable secondary transform candidate is further specified by the explicitly signaled LFNST index. The index is signaled in a bit-stream once per Intra CU after the transform coefficients.

**Transform selection table**

| IntraPredMode | Transform set index |
|---|---|
| IntraPredMode < 0 | 1 |
| 0 <= IntraPredMode <= 1 | 0 |
| 2 <= IntraPredMode <= 12 | 1 |
| 13 <= IntraPredMode <= 23 | 2 |
| 24 <= IntraPredMode <= 44 | 3 |
| 45 <= IntraPredMode <= 55 | 2 |
| 56 <= IntraPredMode<= 80 | 1 |
| 81 <= IntraPredMode<= 83 | 0 |

### Non-separable primary transform (NSPT) for intra coding

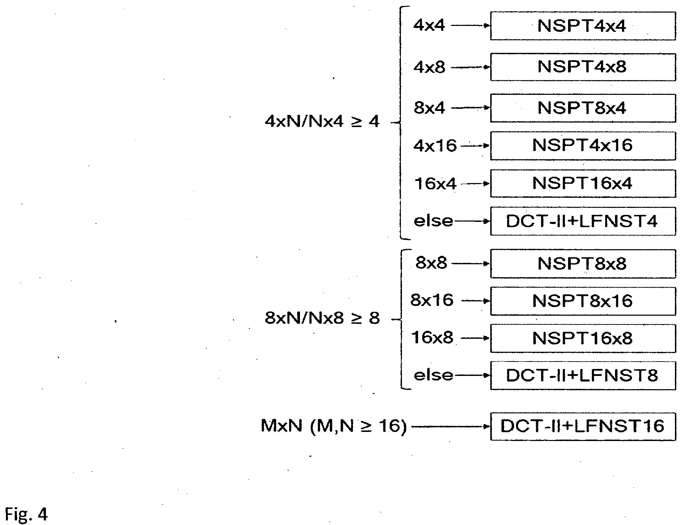

The separable DCT-II plus LFNST transform combinations are replaced with NSPT for the block shapes 4x4, 4x8, 8x4 and 8x8, 4x16, 16x4, 8x16 and 16x8. The affected block sizes are summarized in Fig. 4 which illustrates an overview of proposed NSPTs among existing LFNSTs.

All NSPTs consist of 35 sets and 3 candidates (similar to the current LFNST). The kernels of NSPTs have the following shapes:
- NSPT4x4: 16x16
- NSPT4x8/NSPT8x4: 32x20
- NSPT8x8: 64x32
- NSPT4x16/NSPT16x4: 64x24
- NSPT8x16/NSPT16x8: 128x40
- NSPT4x32/NSPT32x4: 128x20
- NSPT8x32/NSPT32x8: 256x24

Therefore, 12, 32, 40 and 88 coefficients are zeroed-out using NSPT4x8/NSPT8x4, NSPT8x8, NSPT4x16/NSPT16x4 and NSPT8x16/NSPT16x8 respectively. For NSPT4x32/NSPT32x4 and NSPT8x32/NSPT32x8, the remaining 108 and 232 positions in each transform block are zeroed-out, respectively.

The NSPT kernel sets may be extended to three sets according to the block prediction mode types.
(1) Conventional intra predicted blocks using NSPT.
(2) template-based intra mode derivation (TIMD), decoder side intra mode derivation (DIMD), extrapolation-based intra prediction (EIP), Matrix Based Intra Prediction (MIP) or spatial geometric partitioning mode (SGPM) using NSPT.
(3) Intra template matching (IntraTMP) and inter CUs blocks using NSPT.

### Parsing order of residual

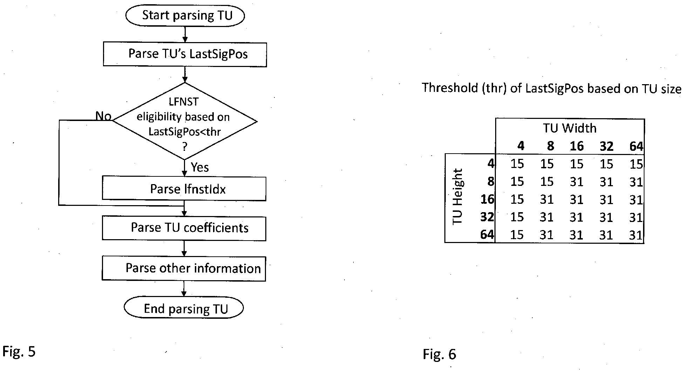

In case of non-separable transforms, like LNFST and NSPT, the parsing order of the residual information includes the following steps depicted also in Fig. 5, which illustrates a parsing order of a residual TU in the presence of LFNST in VVC and ECM:
*(1) LastSigPos parsing:* Parse the position of a last significant coefficient in the TU, also referred to as LastSigPos. This value is decomposed of horizontal and vertical coordinates of the last significant coefficient.
*(2) LFNST eligibility:* This step compares the value of LastSigPos with a pre-defined threshold to determine whether the TU is eligible for the non-separable transform. The threshold is typically determined based on TU characteristics, such as TU size. Fig. 6 shows one example taken from ECM-16.0.
*(3) LfnstIdx parsing:* If step 2 determines that the TU is eligible for the non-separable transform, step 3 parses an index referred to as lfnstIdx (even though it may also be used for NSPT).
*(4) Coefficients parsing:* Regardless of the LFNST eligibility, Step 4 parses the remaining syntax elements needed to determine actual transform coefficients. These syntax elements typically include sigFlag, sign, gtX, remLevel etc.
*(5) Other information parsing:* Regardless of the LFNST eligibility, Step 5 parses other information.

### Disadvantages of the Prior Art

The above-described processes for coding prediction residuals use a non-separable transform process only dependent on a position of a last significant coefficient of the TU (LastSigPos) and the existing condition only verifies whether it is located in a certain low-frequency range of the TU. However, it may be that a residual with overall mid-frequency range also meets the LastSigPos condition with no or very few actual low frequency transform coefficient. In such cases, the non-separable transform will be enabled for the residual coding, although it is not intended for it. This results in introducing bitrate overhead for signaling the non-separable transform information and also it may increase the computational complexity of encoder or decoder.

Further, the above-described for coding prediction residuals, which uses a non-separable transform process, obtains (e.g., by parsing a data stream) information related to the non-separable transform process, like the lfnstIdx, followed by parsing the LastSigPos. This parsing order may be disadvantageous in case the TU related information is needed for processing ahead of the information related to the non-separable transform process, or it lead to a reduction in coding efficiency.

### Inventive Approach

Embodiments of the present disclosure address the drawbacks encountered in prior are approaches. More specifically, for addressing the issue regarding an undesired enabling of the non-separable transform process, it is enabled dependent on a position of a last significant coefficient of the TU and at least one further TU coefficient feature fulfilling one or more pre-defined conditions (first aspect). For addressing the problems due to the conventional parsing order, a position of a last significant coefficient of the TU and at least one further TU coefficient feature are parsed from a data stream before information related to the non-separable transform process (second aspect).

Stated differently, a first aspect of this disclosure proposes alternative conditions to enable a non-separable transform. In accordance with embodiments, the alternative conditions incorporate at least one piece of contextual information from the TU coefficients, also referred to as one or more further TU coefficient features, in addition to the position of the last significant coefficient. Examples of such contextual information include a number, frequency and amplitude of the significant coefficients of the TU. Embodiments of a second aspect of this disclosure, modify the parsing order of TU syntax elements. According to the modified schemes, at least one transform coefficient syntax element, in addition to the position of last significant coefficient, is parsed before the non-separable transform index (e.g., the lfnstIdx in VVC and ECM). Examples of such transform coefficient syntax elements are the significance flag, a coefficient level, a sign etc.

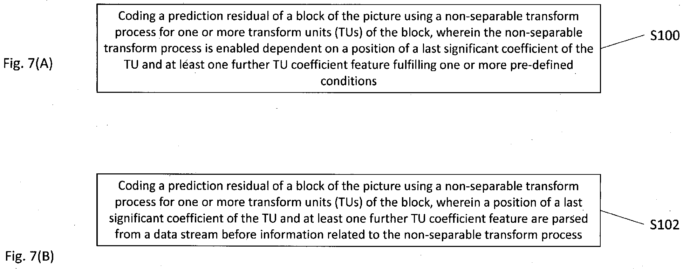

Fig. 7(A) illustrates a flow diagram of an embodiment of a method of coding a prediction residual of one or more blocks of a picture with a first aspect of the present disclosure. The method includes:
- S100:: Coding a prediction residual of a block of the picture using a non-separable transform process for one or more transform units (TUs) of the block, wherein the non-separable transform process is enabled dependent on a position of a last significant coefficient of the TU and at least one further TU coefficient feature fulfilling one or more pre-defined conditions.

In accordance with embodiments, a condition to enable the non-separable transform depends on a comparison of a value of at least one significant coefficient with a predefined threshold and a comparison of a value of the at least one further TU coefficient feature with a further a predefined threshold.

Fig. 7(B) illustrates a flow diagram of an embodiment of a method of coding a prediction residual of one or more blocks of a picture in accordance with a second aspect of the present disclosure. The method includes:
- S102:: Coding a prediction residual of a block of the picture using a non-separable transform process for one or more transform units (TUs) of the block, wherein a position of a last significant coefficient of the TU and at least one further TU coefficient feature are parsed from a data stream before information related to the non-separable transform process.

In accordance with embodiments, the first and second aspects of the present disclosure may be applied separately. However, the present disclosure is not limited to such embodiments. In accordance with other embodiments, the first and second aspects of the present disclosure may be applied in combination.

In accordance with embodiments, a condition to determine an eligibility of LFNST for a TU is determined or computed based on a scan position of the last significant coefficient as well as at least one other feature related to the transform coefficients.

In accordance with embodiments, an alternative parsing order of TU information is provided in which, in addition to the last significant position, at least one more syntax element related to TU coefficient is parsed before the syntax element related to the LFNST.

In accordance with embodiments, an alternative parsing order of TU information is provided in order the make available at least one feature related to the transform coefficients, other than the scan position of the last significant coefficient. The at least one feature related to the transform coefficients is then used in the condition to determine the eligibility of LFNST for the said TU.

In ECM, there are two methods for using non-separable transform, Low-Frequency Non-Separable Transform (LFNST) and Non-Separable Primary Transform (NSPT), where the concept of NSPT has been developed mostly based on LFNST. In fact, VVC only includes LFNST. As LFNST and NSPT methods share several aspects, in this disclosure LFNST is used to refer to both methods for simplicity. It is important to note that all aspects and methods described herein may also by applied to NSPT or to any other applicable non-separable transform. In the description the following terms are used:
- *LFNST eligibility:* This term is used as the short way to indicate the condition to determine whether LFNST is eligible for a TU. If a TU is LFNST eligible, then the LFNST information, such as lfnstIdx, are parsed. Otherwise, the TU parsing is proceeded without parsing any LFNST information, consequently the lfnstIdx is inferred to be 0.
- *Contextual information:* The term contextual information refers to any information associated to a TU that is available at the time of parsing the IfnstIdx and that may be used in order to determine the LFNTS eligibility for that TU. The contextual information is typically related, but not limited, to transform coefficients of the TU. For example, the LastSigPos is a contextual information related to transform coefficients of a TU that is currently used to conditionally determine eligibility of LFNST for the TU. Further examples of contextual information are described below.
- *Low-frequency range:* This term is used to refer to the range of scan indexes that are considered as low-frequency for a TU with a given characteristic (e.g., a size). Typically, the low-frequency range is in the form of [0, *thr*]*,* where *thr* denotes a threshold for the given TU size. In VVC and ECM, this threshold is determined based on the TU size. To clarify the relation between the LastSigPos and the low-frequency range in the context of non-separable eligibility, it is noted that, if the LastSigPos of a TU is outside the low-frequency range (i.e., LastSigPos > thr), then that TU is considered as non-eligible for LFNST, consequently the lfnstIdx is inferred to be 0.

As mentioned above, the present disclosure concerns the following aspects:
- *Aspect 1:* Incorporating contextual information in determining LFNST eligibility for TUs.
- *Aspect 2:* Changing the parsing scheme of residual syntax elements. This aspect may be used to make contextual information of *Aspect 1* available for determining LFNST eligibility.

### Aspect 1: Incorporating contextual information in LFNST eligibility

The first aspect proposes to incorporate at least one contextual information in addition to LastSigPos in order to determine the LFNST eligibility for a TU. This contextual information may be, but is not limited, related to transform coefficients of the TU. In the following, embodiments are described which use coefficient-related contextual information to determine the LFNST eligibility.

### Number of non-significant coefficients

In LFNST eligible TUs, all significant coefficients are positioned in the low-frequency range. However, it is common that the low-frequency range also contains one or more non-significant (i.e., zero) coefficients. In accordance with embodiments, it is assumed that the number of non-significant coefficients indicates whether the TU is actually to be considered low-frequency, if not, the TU is LFNST non-eligible.

Below embodiments are given, where the number of non-significant coefficients in the low-frequency range is used to determine the LFNST eligibility condition.

In accordance with an embodiment, the number of non-significant coefficients in the low-frequency range is compared to a threshold to determine the LFNST eligibility condition. This threshold may be fixed or may be adaptive based on TU characteristics, such as a TU size (e.g., using a look-up table).

In accordance with another embodiment, the ratio of non-significant coefficients is used to determine the LFNST eligibility condition. In one embodiment, the ratio of non-significant coefficients is computed with respect to the number of significant coefficients. In another embodiment, the above ratio is computed with respect to the length of the low-frequency range. In yet another embodiment, the ratio is computed with respect to a total number of coefficients in the TU. In all embodiments, the computed ratio is eventually compared to a threshold to determine the LFNST eligibility condition. Similar to the previous embodiments, this threshold may be set as a fixed value or may be adaptively set based on TU characteristics, such as a TU size (e.g., using a look-up table defined in the codec).

### Frequency of significant coefficients

In accordance with embodiments, a frequency of significant coefficients in the low-frequency range is taken into account to determine the LFNST eligibility condition. For this a metric for the frequency of a coefficient is defined. Typically, the scan position is adapted to increase along with the transform frequency. Therefore, in accordance with another embodiment, the frequency metric is based on the scan position.

In accordance with embodiments, the value of the scan index may be the simplest metric for the frequency of a coefficient. In accordance with another embodiment, the row and column indexes associated with the scan index are used as the metric of frequency. For instance, row + column may be a metric for the frequency of a coefficient located at the position <row, column> in the TU. In accordance with another embodiment, the minimum (or maximum) value between row and columns values may be used as the metric for the frequency of a coefficient at the position <row, column> in the TU.

Given an arbitrary frequency metric for the coefficient positions, other approaches to incorporate a frequency of significant coefficients in determining the LFNST eligibility condition may be considered. In accordance with an embodiment, a sum of frequencies of significant coefficients is used. To do so, the sum of frequencies might be compared to a fixed or TU-adaptive threshold to determine the LFNST eligibility.

### Amplitude of transformed coefficients

In accordance with embodiments, amplitudes of transform coefficients in the low-frequency range are used to determine the LFNST eligibility condition.

In accordance with an embodiment, a sum of significant coefficients in the low-frequency range is compared to a threshold to determine whether LFNST is eligible. Such a threshold may be fixed or TU-adaptive.

In accordance with another embodiment, the sum of significant coefficients is weighted. For instance, the frequency metric discussed above may be used as weight. The determined or computed weighted sum of significant coefficients may be compared to a fixed or TU-adaptive threshold to determine the LFNST eligibility condition.

### LFNST index parsing using contextual information

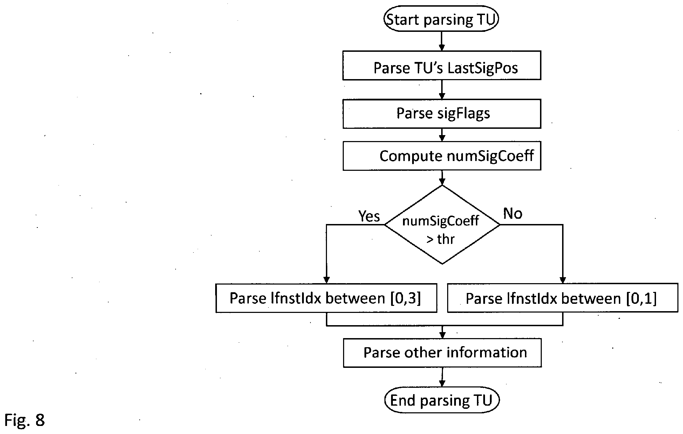

In accordance with embodiments, certain lfnstIdx values may be enabled or disabled based on at least one contextual information. A maximum number of lfnstIdx values may be reduced from 4 candidates as default (i.e., from the default value) to 2, when a number of significant coefficients (numSigCoeffs) is smaller than a certain threshold, and is kept at 4 (i.e., at the default value) when the number of significant coefficients is larger than or equal to the threshold. Fig. 8 illustrates an embodiment using numSigCoeff to reduce a number of allowed transform sets (lfnstIdx). Initially, the TU's LastSigPos is parsed, followed by the parsing of the sigFlags. Then the numSigCoeff is obtained or calculated and it is determined whether it is above or below the threshold. Thus, the number of significant coefficients for a TU is parsed before the lfnstIdx, then parsing the lfnstIdx of 1 maybe skipped and the parsed value for the lfnstIdx may be adapted to consider only 2 lfnstIdx values. It is noted that this process (potential reduction of transform sets) may be performed in addition to an existing process (not replacing it) that is used to determine a maximum number of lfnstIdx. Thus, in the embodiment of Fig. 8 lastSigPos may be considered (as in the state-of-the-art) along with the inventive SigFlags (for obtaining numSigCoeffs, in order to determine the maximum number of lfnstIdx.

### Aspect 2: Alternative parsing to make contextual information available

The current parsing order of VVC and ECM may not allow using any arbitrary contextual information to determine the LFNST eligibility condition. Embodiments of the present disclosure provide for alternative parsing orders, e.g., to enable the concepts and ideas according to the first aspect. However, it is noted that the alternative parsing schemes presented here may be used independent of the first aspect, i.e., may be also be used in concepts other than providing contextual information for determining the LFNST eligibility condition. In accordance with embodiments, either of the alternative parsing schemes described herein may be used to improve the coding efficiency of the codec, without changing the LFNST eligibility condition. For example, one can change the order of parsing of TU coefficients such that certain syntax elements (e.g. sigFlags) are available before parsing the LFNST information (e.g. LFNST index), for the purpose of involving the coefficients' information in determining a CABAC context for parsing the LFNST index. The general concept of this aspect of the invention is to parse at least one information related to TU coefficient's (other than the position of the last significant coefficient) before the parsing of the LFNST information (e.g. LFNST index).

### Parse sigFlag before lfnstIdx

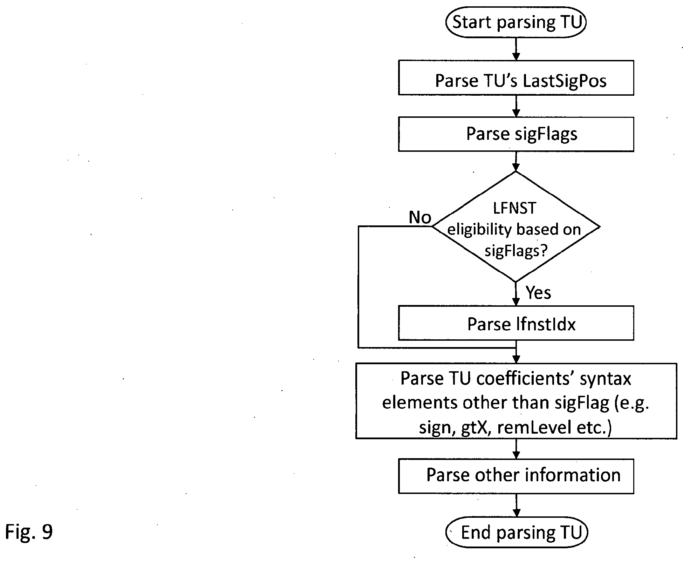

In accordance with embodiments, for identifying the significant coefficients in the low-frequency range, e.g. in order to count them or compute their frequencies as described above, at least the significance flags, also referred to as sigFlag, of all coefficients are parsed before the lfnstIdx. Fig. 9 illustrates an embodiment using a modified parsing order of a residual TU to incorporate a sigFlag in the LFNST condition. Initially, the TU's LastSigPos is parsed, followed by the sigFlags. Then it is determined whether the LFNST eligibility is based on the sigFlags. If yes, the IfnstIdx is parsed. Then the TU coefficients' syntax elements other than sigFlag (e.g. sign, gtX, remLevel etc.) are parsed, as well as other information. The modified parsing scheme allows access to sigFlags of coefficients in order to incorporate them in the LFNST eligibility condition. It is noted that in the embodiment of Fig. 9 lastSigPos may be considered (as in the state-of-the-art) along with the inventive sigFlag information, in order to determine LFNST eligibility.

It is noted that this is one of several embodiments of providing access to sigFlag at this stage of parsing. In accordance with other embodiments,, the coefficient signs may be parsed at the same time as the sigFlags.

### Parse TU coefficients before lfnstIdx

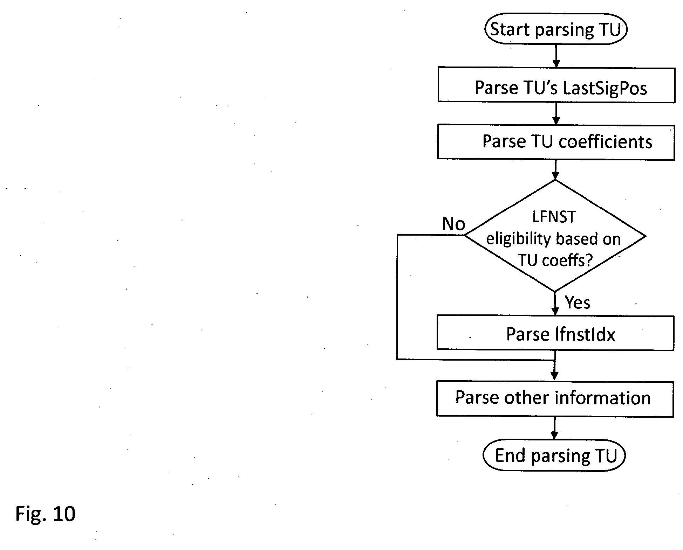

In accordance with embodiments, to know the coefficient amplitudes, e.g., as described above, more syntax elements of the TU coefficients than only the sigFlag are parsed. In accordance with embodiments, the entire TU coefficients' levels and signs may be parsed before the lfnstIdx. Fig. 10 illustrates an embodiment using a modified parsing order of a residual TU to incorporate coefficient levels in the LFNST condition,, more specifically, the amplitude information before parsing the lfnstIdx. Initially, the TU's LastSigPos is parsed, followed by the TU coefficients. Then it is determined whether the LFNST eligibility is based on the TU coefficients. If yes, the lfnstIdx is parsed. Otherwise, lfnstIdx is not parsed.

### Decoding Method

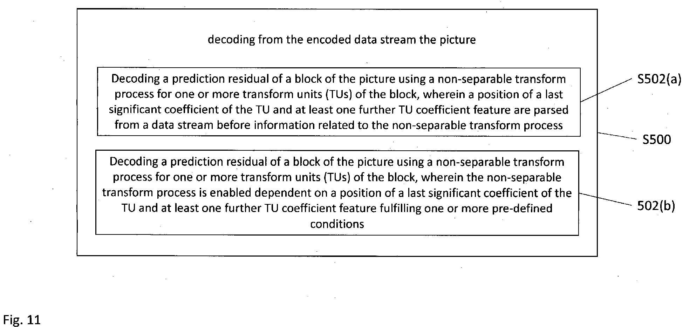

Fig. 11 illustrates a flow diagram of a method for decoding an encoded data stream, the encoded data stream including data representing a picture. The method includes the following:
- S500:: Decoding from the encoded data stream the picture, wherein decoding the picture comprises: decoding S502(a) a prediction residual of a block of the picture using a non-separable transform process for one or more transform units (TUs) of the block, wherein a position of a last significant coefficient of the TU and at least one further TU coefficient feature are parsed from a data stream before information related to the non-separable transform process, and/or decoding S502(b) a prediction residual of a block of the picture using a non-separable transform process for one or more transform units (TUs) of the block, wherein the non-separable transform process is enabled dependent on a position of a last significant coefficient of the TU's transform coefficients and at least one further TU coefficient feature fulfilling one or more pre-defined conditions.

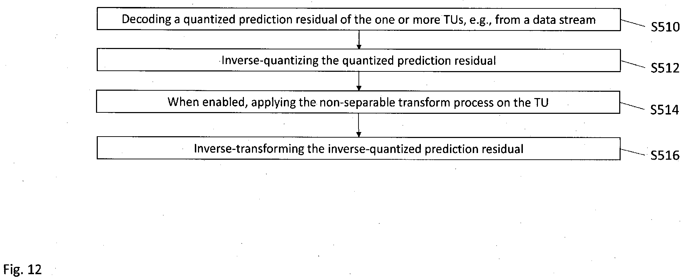

Fig. 12 illustrates a flow diagram of a further embodiment of decoding a prediction residual of a currently processed block of a picture or frame. The method comprises the following:

| | |
|---|---|
| S510: | Decoding a quantized prediction residual of the one or more TUs, e.g., from a data stream. |
| S512: | Inverse-quantizing the quantized prediction residual. |
| S514: | When enabled, applying the non-separable transform process on the TU. |
| S516: | Inverse-transforming the inverse-quantized prediction residual. |

### Encoding Method

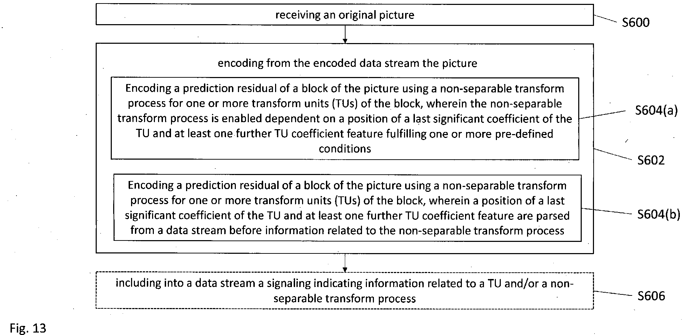

Fig. 13 illustrates a flow diagram of a method for encoding a picture into an encoded data stream. The encoded data stream includes data representing the picture and the method includes the following:

| | |
|---|---|
| S600: | Receiving an original picture. |
| S602: | Encoding the picture into the encoded data stream, wherein encoding the picture comprises: |
| | encoding S604(a) a prediction residual of a block of the picture using a non-separable transform process for one or more transform units (TUs) of the block, wherein the non-separable transform process is enabled dependent on a position of a last significant coefficient of the and at least one further TU coefficient feature fulfilling one or more pre-defined conditions, and/or |
| | encoding S604(b) a prediction residual of a block of the picture using a non-separable transform process for one or more transform units (TUs) of the block, wherein a position of a last significant coefficient of the TU and at least one further TU coefficient feature are parsed from a data stream before information related to the non-separable transform process. |

Optionally, the method comprises including S606 into the data stream or bitstream a signaling indicating information related to a TU and/or a non-separable transform process.

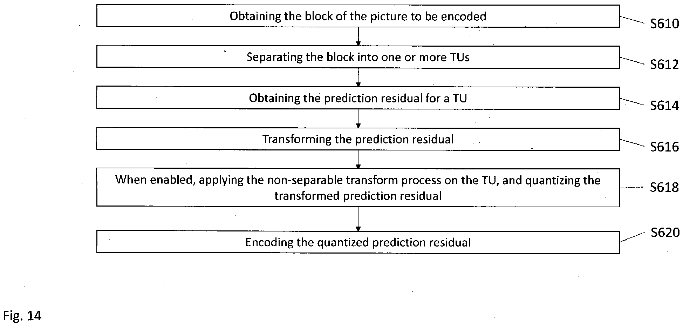

Fig. 14 illustrates a flow diagram of a further embodiment of encoding a prediction residual of a currently processed block of a picture or frame. The method comprises the following:

| | |
|---|---|
| S610: | Obtaining the block of the picture to be encoded. |
| S612: | Separating the block into the one or more TUs. |
| S614: | Obtaining the prediction residual for a TU. |
| S616: | Transforming the prediction residual. |
| S618: | When enabled, applying the non-separable transform process on the TU, and quantizing the transformed prediction residual. |
| S620: | Encoding the quantized prediction residual. |

### Further embodiments

So far, the inventive concept has been described with reference to aspects and embodiments concerning methods of processing one or more blocks of a picture, e.g., for decoding and/or for encoding. In accordance with further embodiments, the present disclosure also provides an apparatus of processing one or more blocks of a picture as encoders/decoders including such an apparatus.

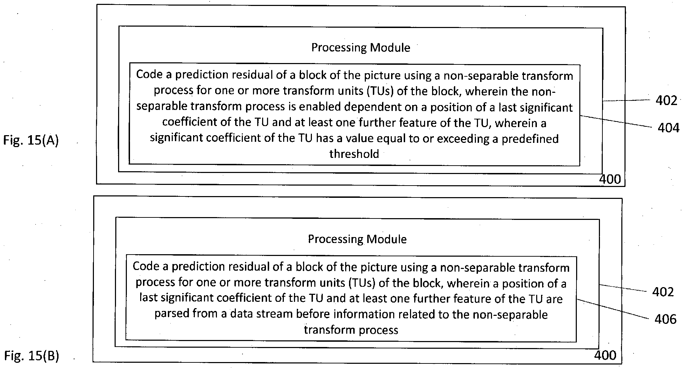

Fig. 15(A) illustrates a block diagram of an apparatus 400 of processing one or more blocks of a picture in accordance with embodiments of the present disclosure. The apparatus 400 includes a processing module 402. The processing module 402 is configured to code 404 a prediction residual of a block of the picture using a non-separable transform process for one or more transform units (TUs) of the block, wherein the non-separable transform process is enabled dependent on a position of a last significant coefficient of the TU and at least one further TU coefficient feature, wherein a significant coefficient of the TU has a value equal to or exceeding a predefined threshold.

Fig. 15(B) illustrates a block diagram of an apparatus 400 of processing one or more blocks of a picture in accordance with further embodiments of the present disclosure. The apparatus 400 includes a processing module 402. The processing module 402 is configured to code 406 a prediction residual of a block of the picture using a non-separable transform process for one or more transform units (TUs) of the block, wherein a position of a last significant coefficient of the TU and at least one further TU coefficient feature are parsed from a data stream before information related to the non-separable transform process.

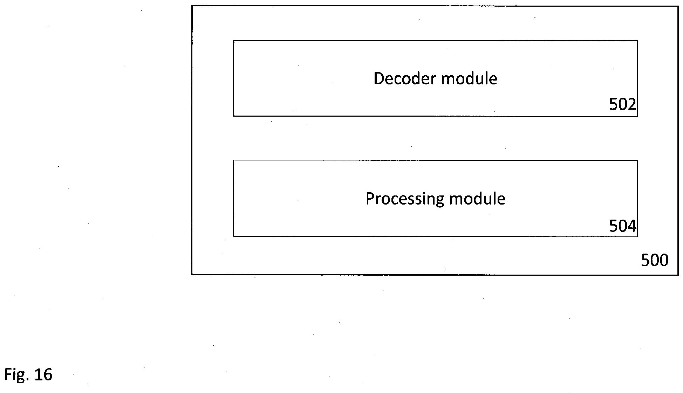

Fig. 16 illustrates a block diagram of a decoder for decoding an encoded data stream in accordance with embodiments of the present disclosure. The encoded data stream includes data representing a picture. The decoder 500 includes the following modules:
- 502:: A decoder module configured to decode from the encoded data stream the picture.
- 504:: A processing module, e.g., a prediction module 170 as depicted in Fig. 2. The processing module 502 is configured to operate in accordance with embodiments of the present disclosure. For example, the processing module 502 includes an apparatus as described with reference to Fig. 15(A) of Fig. 15(B).

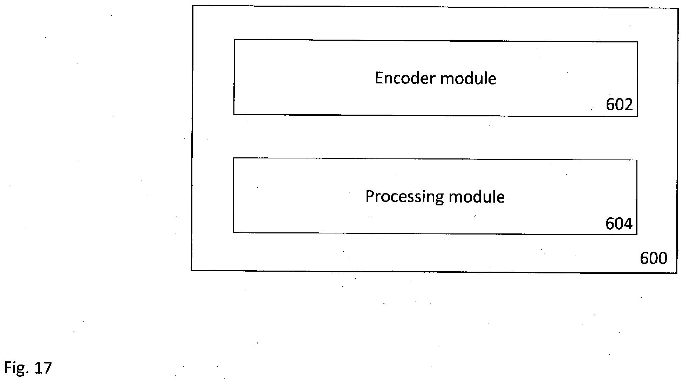

Fig. 17 illustrates a block diagram of an encoder for encoding a picture into an encoded data stream in accordance with embodiments of the present disclosure. The encoded data stream includes data representing the picture. The encoder 600 includes the following modules:
- 602:: An encoder module configured to receive the original picture and to encode the picture into the encoded data stream.
- 604:: A processing module, e.g., a prediction module 124 as depicted in Fig. 1. The processing module 602 is configured to operate in accordance with embodiments of the present disclosure. For example, the processing module 502 includes an apparatus as described with reference to Fig. 15(A) of Fig. 15(B).

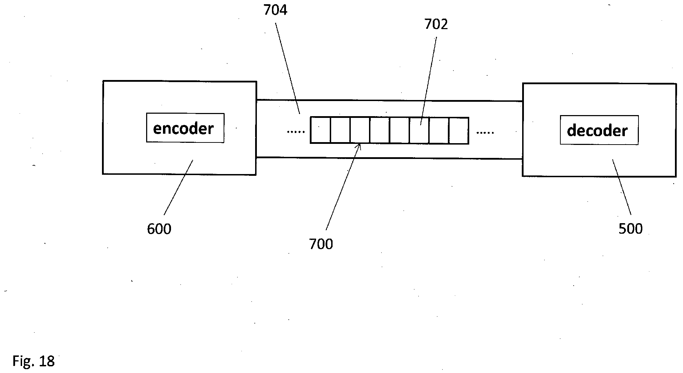

Fig. 18 illustrates a data stream 700 in accordance with embodiments of the present disclosure, which has encoded thereinto a picture and information data associated with the picture. For example, the data stream or bitstream 700 may be provided by an encoder 600 that performs the inventive method when encoding the picture into the data stream 700. The data stream 700 is transmitted to a decoder 500 via a wired or wireless transmission medium 702, like cable or a radio link, and the decoder 500 decodes from the data stream 700 the picture. The data stream includes a signaling 704 indicating information related to a TU and/or a non-separable transform process.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

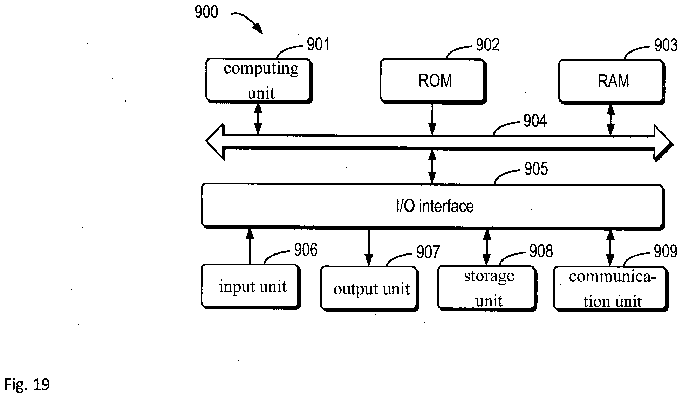

Fig. 19 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 may also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code may be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user may provide an input to the computer. Other types of devices may also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user may interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure may be achieved, and no limitation is imposed herein.

Further embodiments are now described:
A 1^{st} embodiment provides a method of coding a prediction residual of one or more blocks of a picture, the method comprising:
   coding a prediction residual of a block of the picture using a non-separable transform process for one or more transform units (TUs) of the block, wherein
   - the non-separable transform process is enabled dependent on a position of a last significant coefficient of the TU and at least one further TU coefficient feature fulfilling one or more pre-defined conditions, and/or
   - a position of a last significant coefficient of the TU and at least one further TU coefficient feature are parsed from a data stream before information related to the non-separable transform process.
A 2^{nd} embodiment provides the method of the 1^{st} embodiment, wherein at least one further TU coefficient is compared to a predefined threshold to determine whether the at least one further TU coefficient fulfils the pre-defined condition, and, when the at least one further TU coefficient fulfils the pre-defined condition, the non-separable transform process is eligible for the TU.
A 3^{rd} embodiment provides the method of the 1^{st} or 2^{nd} embodiment, wherein the at least one further TU coefficient feature comprises one or more of the following:
   - a number of non-significant coefficients of the TU in a predefined frequency range, like a low-frequency range, of the TU, wherein a non-significant coefficient of the TU has a predefined value, like zero, or a value less than the predefined threshold,
   - a ratio including the number of non-significant coefficients in the predefined frequency range of the TU
   - a sum of frequencies of significant coefficients in the predefined frequency range of the TU,
   - a sum of amplitudes of coefficients in the predefined frequency range of the TU,
   - a number of significant coefficients in the predefined frequency range of the TU.
A 4^{th} embodiment provides the method of the 3^{rd} embodiment, wherein the ratio comprises a ratio of the non-significant coefficients with respect to
   - a number of significant coefficients in the predefined frequency of the TU, or
   - a total number of coefficients of the TU, or
   - a length of the predefined frequency range of the TU.
A 5^{th} embodiment provides the method of the 3^{rd} or 4^{th} embodiment, wherein the frequency of a significant coefficient is determined using at least one predefined metric.
A 6^{th} embodiment provides the method of the 5^{th} embodiment, wherein the predefined metric is based on a scan position, like a scan index in the predefined frequency range of the TU.
A 7^{th} embodiment provides the method of the 6^{th} embodiment, wherein the predefined metric is a sum of a row and a column index for a significant coefficient at the scan position.
An 8^{th} embodiment provides the method of any one of the 3^{rd} to 9^{th} embodiments, wherein the sum of amplitudes of the coefficients comprises a sum of significant coefficients in the predefined frequency range.
A 9^{th} embodiment provides the method of the 8^{th} embodiment, wherein the amplitudes of the significant coefficients are weighted, e.g., using a predefined metric that may be based on a scan position, like a scan index in the predefined frequency range, e.g., a low-frequency range, of the TU.
A 10^{th} embodiment provides the method of any one of the preceding embodiments, wherein one or more transform sets for the non-separable transform process are enabled or disabled dependent on the at least one further TU coefficient feature.
An 11^{th} embodiment provides the method of the 10^{th} embodiment, wherein, when the at least one further TU coefficient feature is
   - below a predefined threshold, a number of transform sets for the non-separable transform process is reduced from a first number, like a default number defined by a codec, to a second number being less than the first number,
   - at or above the predefined threshold, the number of transform sets for the non-separable transform process is kept at the first number, like the default number defined by a codec.
A 12^{th} embodiment provides the method of the 10^{th} or 11^{th} embodiment, wherein,
   the at least one further TU coefficient feature, like the number of significant or non-significant coefficients of the TU, is parsed, e.g., from a data stream, before parsing an index, like a lfnstIdx value, indicating a transform set to be used for the non-separable transform process, and
   in case the number of transform sets is to be reduced, the parsed index is adapted to represent the second number of transform sets.
A 13^{th} embodiment provides the method of any one of the 2^{nd} to 12^{th} embodiments, wherein the predefined threshold is a fixed threshold.
A 14^{th} embodiment provides the method of any one of the 2^{nd} to 12^{th} embodiments, wherein the predefined threshold is an adaptive threshold.
A 15^{th} embodiment provides the method of the 14^{th} embodiment, wherein the adaptive threshold is determined based on one or more TU characteristics, like a size of the TU, e.g. by accessing a look-up table holding different thresholds for different TU sizes as defined in a codec.
A 16^{th} embodiment provides the method of any one of the preceding embodiments, wherein
   the information related to the non-separable transform process comprises an index, like a lfnstIdx value, indicating a transform set to be used for the non-separable transform process, and the at least one further TU coefficient feature comprises at least one TU syntax element, like a significance flag, a coefficient level, a sign, and
   the position of a last significant coefficient of the TU and at least one TU syntax element are parsed from a data stream before the index.
A 17^{th} embodiment provides the method of the 16^{th} embodiment, wherein, for identifying significant coefficients in the predefined frequency range, the significance flags of the coefficients of the TU in the predefined frequency range are parsed before the index.
An 18^{th} embodiment provides the method of the 17^{th} embodiment, wherein coefficient signs are parsed at the same time as significance flags.
A 19^{th} embodiment provides the method of the 16^{th} embodiment, wherein, for identifying coefficient amplitudes in the predefined frequency range, the coefficients of the TU in the predefined frequency range are parsed before the index.
A 20^{th} embodiment provides the method of any one of the preceding embodiments, wherein the predefined frequency range is a low-frequency range of the TU having a range of scan indexes in the form of [0, thr], with thr denoting a threshold depending on a size of the TU.
A 21^{st} embodiment provides the method of any one of the preceding embodiments, wherein the non-separable transform process comprises one or more of the following:
   - a low-frequency non-separable secondary transform (LFNST),
   - a non-separable primary transform (NSPT).
A 22^{nd} embodiment provides the method of any one of the preceding embodiments, wherein coding the prediction residual comprises:
   - obtaining the prediction residual for a TU,
   - transforming the prediction residual,
   - when enabled, applying the non-separable transform process on the TU,
   - quantizing the transformed prediction residual, and
   - coding the quantized prediction residual.
A 23^{rd} embodiment provides the method of any one of the 1^{st} to 21^{st} embodiments, wherein coding the prediction residual comprises decoding the prediction residual by:
   - decoding a quantized prediction residual of the one or more TUs, e.g., from a data stream,
   - inverse-quantizing the quantized prediction residual,
   - when enabled, applying the non-separable transform process on the TU, and
   - inverse-transforming the inverse-quantized prediction residual.
A 24^{th} embodiment provides the method of any one of the 1^{st} to 21^{st} embodiments, wherein coding the prediction residual comprises encoding the prediction residual by:
   - obtaining the block of the picture to be encoded,
   - separating the block into the one or more TUs,
   - obtaining the prediction residual for a TU,
   - transforming the prediction residual,
   - when enabled, applying the non-separable transform process on the TU,
   - quantizing the transformed prediction residual, and
   - encoding the quantized prediction residual.
A 25^{th} embodiment provides a method for decoding a data stream, the data stream including data representing a picture, the method comprising:
   decoding from the data stream the picture,
   wherein decoding the picture comprises coding a prediction residual of one or more blocks of a picture according to any one the 1st to 23rd embodiments.
A 26^{th} embodiment provides a method for encoding a picture into a data stream, the data stream including data representing the picture, the method comprising:
   receiving an original picture, and
   encoding the picture into the data stream,
   wherein encoding the picture comprises coding a prediction residual of one or more blocks of a picture according to any one of the 1^{st} to 22nd embodiments and the 24th embodiment.
A 27^{th} embodiment provides a non-transitory computer-readable storage medium comprising instructions which, when executed by a computer, cause the computer to carry out the method of any one of the preceding embodiments.
A 28^{th} embodiment provides an apparatus of processing one or more blocks of a picture, the apparatus comprising:
   a processing module, wherein the processing module is configured code a prediction residual of a block of the picture using a non-separable transform process for one or more transform units (TUs) of the block, wherein
   - the non-separable transform process is enabled dependent on a position of a last significant coefficient of the TU and at least one further TU coefficient feature fulfilling one or more pre-defined conditions, and/or
   - a position of a last significant coefficient of the TU and at least one further TU coefficient feature are parsed from a data stream before information related to the non-separable transform process.
A 29^{th} embodiment provides an apparatus for decoding a data stream, the data stream including data representing a picture, the apparatus comprising:
   a decoder module configured to decode from the data stream the picture, and
   an apparatus according to the 28th embodiment.
A 30^{th} embodiment provides an apparatus for encoding a picture into a data stream, the data stream including data representing the picture, the apparatus comprising:
   an encoder module configured to receive the original picture and to encode the picture into the data stream, and
   an apparatus according to the 28th embodiment.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

### References

[1] H.264: Advanced video coding for generic audiovisual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-202008-I/en
[4] AV1 Bitstream & Decoding Process Specification, http://aomedia.org/av1/specification/
[5] Algorithm description for Versatile Video Coding and Test Model 11 (VTM 11), https://jvet-experts.org/doc_end_user/current_document.php?id=10541
[6] Algorithm description of Enhanced Compression Model 12 (ECM 12), https://jvetexperts.org/doc_end_user/current_document.php?id=13915

## Claims

1. A method of coding a prediction residual of one or more blocks of a picture, the method comprising:
coding a prediction residual of a block of the picture using a non-separable transform process for one or more transform units (TUs) of the block, wherein
- the non-separable transform process is enabled dependent on a position of a last significant coefficient of the TU and at least one further TU coefficient feature fulfilling one or more pre-defined conditions, and/or
- a position of a last significant coefficient of the TU and at least one further TU coefficient feature are parsed from a data stream before information related to the non-separable transform process.

2. The method of claim 1, wherein the at least one further TU coefficient is compared to a predefined threshold to determine whether the at least one further TU coefficient fulfils the pre-defined condition, and, when the at least one further TU coefficient fulfils the predefined condition, the non-separable transform process is eligible for the TU.

3. The method of claim 1 or 2, wherein the at least one further TU coefficient feature comprises one or more of the following:
- a number of non-significant coefficients of the TU in a predefined frequency range, like a low-frequency range, of the TU, wherein a non-significant coefficient of the TU has a predefined value, like zero, or a value less than the predefined threshold,
- a ratio including the number of non-significant coefficients in the predefined frequency range of the TU
- a sum of frequencies of significant coefficients in the predefined frequency range of the TU,
- a sum of amplitudes of coefficients in the predefined frequency range of the TU,
- a number of significant coefficients in the predefined frequency range of the TU.

4. The method of claim 3, wherein the ratio comprises a ratio of the non-significant coefficients with respect to
- a number of significant coefficients in the predefined frequency of the TU, or
- a total number of coefficients of the TU, or
- a length of the predefined frequency range of the TU.

5. The method of claim 3 or 4, wherein the frequency of a significant coefficient is determined using at least one predefined metric, e.g., a scan position, like a scan index in the predefined frequency range of the TU.

6. The method of any one of claims 3 to 5, wherein the sum of amplitudes of the coefficients comprises a sum of significant coefficients in the predefined frequency range.

7. The method of claim 6, wherein the amplitudes of the significant coefficients are weighted, e.g., using a predefined metric that may be based on a scan position, like a scan index in the predefined frequency range, e.g., a low-frequency range, of the TU.

8. The method of any one of the preceding claims, wherein
one or more transform sets for the non-separable transform process are enabled or disabled dependent on the at least one further TU coefficient feature, and
when the at least one further TU coefficient feature is
- below a predefined threshold, a number of transform sets for the non-separable transform process is reduced from a first number, like a default number defined by a codec, to a second number being less than the first number,
- at or above the predefined threshold, the number of transform sets for the non-separable transform process is kept at the first number, like the default number defined by a codec.

9. The method of claim 8, wherein,
the at least one further TU coefficient feature, like the number of significant or non-significant coefficients of the TU, is parsed, e.g., from a data stream, before parsing an index, like a lfnstIdx value, indicating a transform set to be used for the non-separable transform process, and
in case the number of transform sets is to be reduced, the parsed index is adapted to represent the second number of transform sets.

10. The method of any one of claims 2 to 9, wherein the predefined threshold is an adaptive threshold that may be determined based on one or more TU characteristics, like a size of the TU, e.g. by accessing a look-up table holding different thresholds for different TU sizes as defined in a codec.

11. The method of any one of the preceding claims, wherein
the information related to the non-separable transform process comprises an index, like a lfnstIdx value, indicating a transform set to be used for the non-separable transform process, and the at least one further TU coefficient feature comprises at least one TU syntax element, like a significance flag, a coefficient level, a sign, and
the position of a last significant coefficient of the TU and at least one TU syntax element are parsed from a data stream before the index.

12. The method of claim 11, wherein
for identifying significant coefficients in the predefined frequency range, the significance flags of the coefficients of the TU in the predefined frequency range are parsed before the index, and/or
for identifying coefficient amplitudes in the predefined frequency range, the coefficients of the TU in the predefined frequency range are parsed before the index.

13. The method of any one of claims 1 to 12, wherein coding the prediction residual comprises decoding the prediction residual by:
- decoding a quantized prediction residual of the one or more TUs, e.g., from a data stream,
- inverse-quantizing the quantized prediction residual,
- when enabled, applying the non-separable transform process on the TU, and
- inverse-transforming the inverse-quantized prediction residual.

14. The method of any one of claims 1 to 12, wherein coding the prediction residual comprises encoding the prediction residual by:
- obtaining the block of the picture to be encoded,
- separating the block into the one or more TUs,
- obtaining the prediction residual for a TU,
- transforming the prediction residual,
- when enabled, applying the non-separable transform process on the TU,
- quantizing the transformed prediction residual, and
- encoding the quantized prediction residual.

15. An apparatus of processing one or more blocks of a picture, the apparatus comprising:
a processing module, wherein the processing module is configured code a prediction residual of a block of the picture using a non-separable transform process for one or more transform units (TUs) of the block, wherein
- the non-separable transform process is enabled dependent on a position of a last significant coefficient of the TU and at least one further TU coefficient feature fulfilling one or more pre-defined conditions, and/or
- a position of a last significant coefficient of the TU and at least one further TU coefficient feature are parsed from a data stream before information related to the non-separable transform process.
